(19) **Europäisches Patentamt European Patent Office Office européen des brevets**

(11) **EP 1 310 769 B1**

(12) **FASCICULE DE BREVET EUROPEEN**

(45) Date de publication et mention de la délivrance du brevet:
**02.07.2008 Bulletin 2008/27**

(51) Int Cl.:
*G01C 23/00* *(2006.01)*  *B64D 43/00* *(2006.01)*
*G05D 1/06* *(2006.01)*

(21) Numéro de dépôt: **02292377.5**

(22) Date de dépôt: **26.09.2002**

(54) **Procédé et dispositif d'aide au pilotage d'un aéronef**

Verfahren und Vorrichtung zur Steuerungshilfe in einem Flugzeug

Method and device for assisting in flying an aircraft

(84) Etats contractants désignés:
**AT BE BG CH CY CZ DE DK EE ES FI FR GB GR IE IT LI LU MC NL PT SE SK TR**

(30) Priorité: **08.11.2001 FR 0114451**

(43) Date de publication de la demande:
**14.05.2003 Bulletin 2003/20**

(73) Titulaire: **AIRBUS France**
**31060 Toulouse (FR)**

(72) Inventeurs:
• **Godard, Eric**
**31500 Toulouse (FR)**
• **Chabe, David**
**31400 Toulouse (FR)**
• **Espinasse, Jacques**
**31820 Pibrac (FR)**

(74) Mandataire: **Hauer, Bernard**
**Cabinet Bonnétat**
**29, Rue de Saint-Pétersbourg**
**75008 Paris (FR)**

(56) Documents cités:
**US-A- 5 808 563**

## Description

La présente invention concerne un procédé et un dispositif d'aide au pilotage d'un aéronef.

On sait que, pour aider un pilote d'un aéronef, par exemple d'un avion de transport, à maîtriser le pilotage, il est usuel de présenter sur un indicateur particulier ou un écran de pilotage [tel qu'un écran PFD ("Primary Flight Display") par exemple] les valeurs de paramètres qui sont représentatifs du vol, tels que la vitesse de l'aéronef.

Sur un écran de pilotage PFD, on affiche, en général, dans ce cas, en plus de la vitesse, une valeur limite minimale admissible pour cette vitesse. Cette valeur ou vitesse minimale (qui est variable en fonction de divers paramètres) correspond à l'angle d'incidence maximale admissible, au-delà duquel l'aéronef est soumis à un phénomène de décrochage. Lorsqu'il souhaite engager une manoeuvre, un pilote peut vérifier de façon visuelle la marge disponible entre la vitesse courante dudit aéronef et ladite valeur limite. Si cette marge tend à devenir nulle, il sait que son action sur un manche de commande risque de ne pas pouvoir être réalisée correctement par l'aéronef (risque de décrochage ou activation des protections des lois de commande de vol).

Sur certains aéronefs, le pilote dispose d'un viseur "tête haute" HUD ("Head Up Display"), sur lequel est visualisée la direction du vecteur vitesse de l'aéronef. Le document US-5 808 563 décrit par exemple un tel viseur. L'utilisation de ce viseur est surtout adaptée aux phases de décollage et d'atterrissage. Toutefois, elle présente des inconvénients pendant les autres phases de vol. Par exemple, lors du pilotage à vue, à basse altitude, d'un avion militaire, le vecteur vitesse, superposé à la vue du monde extérieur à travers le pare-brise, indique le point vers lequel se dirige l'avion, sans toutefois être représentatif de l'amplitude de la vitesse. Le pilote dispose donc d'informations instrumentales de pilotage dans le viseur HUD afin de manoeuvrer correctement l'avion dans des conditions réclamant une attention soutenue sur l'environnement extérieur (par exemple : présence de reliefs à proximité), sans avoir à quitter du regard cet environnement visible à travers le pare-brise. Il dispose ainsi des informations affichées sur le viseur HUD. Toutefois, il ne dispose pas de celles affichées sur l'écran de pilotage PFD. En effet, pour des raisons d'une part de clarté et de lisibilité des informations et, d'autre part, de visibilité à travers le pare-brise, il n'est pas souhaitable de présenter toutes les informations sur le viseur HUD. En particulier, la vitesse courante de l'avion et la valeur limite de la vitesse ne peuvent pas être clairement affichées comme sur un écran de pilotage PFD. Pourtant, en l'absence de prise en compte de la marge entre ces deux informations de vitesse, si le pilote tente par exemple de cabrer l'avion (en tirant sur le manche de commande) pour franchir un relief alors que cette marge est déjà sensiblement nulle, l'avion ne pourra pas répondre à cette action et ne modifiera pas sa trajectoire comme voulu, risquant ainsi de percuter ledit relief.

La présente invention a pour objet de remédier à ces inconvénients. Elle concerne un procédé d'aide au pilotage d'un aéronef, permettant de présenter à un pilote de l'aéronef des informations qui sont importantes pour la maîtrise du pilotage.

A cet effet, ledit procédé selon lequel on présente sur un écran de visualisation un premier signe caractéristique illustrant un vecteur vitesse de l'aéronef, est remarquable, selon l'invention, en ce que de plus :

- on détermine au moins une marge de manoeuvre longitudinale de l'aéronef, qui est exprimée en facteur de charge et qui est relative à l'une des deux manoeuvres de cabrage et de piqué de l'aéronef ; et
- on présente, sur ledit écran de visualisation, au moins un second signe caractéristique qui est associé audit premier signe caractéristique et qui illustre ladite marge de manoeuvre longitudinale.

Ainsi, grâce à l'invention, on présente au pilote une marge de manoeuvre longitudinale qui peut être définie comme la différence entre une valeur limite admissible et la valeur actuelle d'une grandeur caractéristique du mouvement longitudinal de l'aéronef. Cette marge de manoeuvre longitudinale traduit donc le domaine de manoeuvre accessible au pilote pour respecter les limitations opérationnelles de l'aéronef. L'invention est donc particulièrement bien adaptée à un viseur HUD.

On notera de plus que, contrairement aux informations habituellement affichées sur un écran de pilotage PFD comprenant comme précité une marge de vitesse, la marge de manoeuvre longitudinale conforme à la présente invention est exprimée en terme de facteur de charge.

Cela entraîne plusieurs avantages importants :

- un premier avantage est lié au fait que le facteur de charge est davantage représentatif du comportement dynamique de l'aéronef que ne l'est une valeur telle que la vitesse. Ainsi, dans certaines conditions de vol, une marge exprimée en terme de facteur de charge est davantage représentative de la marge de manoeuvre de l'aéronef qu'une marge exprimée en terme de vitesse ;
- de plus, dans l'hypothèse où les calculs conduisant à l'établissement de la marge de manoeuvre font appel à des approximations consistant à linéariser des équations de la mécanique du vol sur un domaine proche des conditions instantanées de vol de l'aéronef, les erreurs dues auxdites approximations sont moindres lorsque la marge de manoeuvre est calculée en terme de facteur de charge que lorsqu'elle est calculée en terme de vitesse ;

- un autre avantage apparaissant lors de l'utilisation d'un viseur HUD résulte du fait que l'affichage sur le viseur HUD est réalisé dans un plan qui est perpendiculaire à l'axe longitudinal de l'aéronef. Ainsi, il est plus ergonomique de disposer d'une marge de manoeuvre exprimée en facteur de charge Nz, donc selon l'axe vertical qui est inclus dans ledit plan du viseur HUD, plutôt que d'une marge de vitesse, laquelle correspond à une information selon l'axe longitudinal qui est perpendiculaire au plan du viseur HUD ; et

- par ailleurs, dans le cas où les commandes de vol de l'aéronef sont telles que les consignes entrées par le pilote au moyen du manche de commande sont exprimées, selon l'axe vertical, en facteur de charge Nz, ladite marge de manoeuvre longitudinale présente aussi l'avantage d'être homogène avec les actions du pilote sur ledit manche de commande.

De façon avantageuse, on détermine deux marges de manoeuvre longitudinales qui sont relatives respectivement à la manoeuvre de cabrage et à la manoeuvre de piqué de l'aéronef, et on présente deux seconds signes caractéristiques correspondants, sur l'écran de visualisation.

En outre avantageusement, on présente ledit second signe caractéristique sur l'écran de visualisation de telle sorte que la distance entre lesdits premier et second signes caractéristiques soit proportionnelle à ladite marge de manoeuvre longitudinale.

Dans un mode de réalisation préféré, on présente sur l'écran de visualisation ledit second signe caractéristique, uniquement si la marge de manoeuvre longitudinale est inférieure à une valeur prédéterminée. Ceci permet de ne pas surcharger l'écran de visualisation lorsque la marge de manoeuvre est suffisante pour pouvoir manoeuvrer l'aéronef sans risque de limitation.

Dans un mode de réalisation particulier, on détermine comme marge de manoeuvre longitudinale, la marge de manoeuvre la plus contraignante entre une première marge de facteur de charge et une seconde marge.

Dans ce cas, premièrement, pour déterminer la marge de manoeuvre relative à la manoeuvre de cabrage, ladite seconde marge correspond avantageusement à une marge d'angle d'incidence $\Delta\alpha$.

De préférence, on calcule ladite marge d'angle d'incidence $\Delta\alpha$, à partir de l'expression suivante :

$$\Delta\alpha = 1 - \left[ \left( \frac{Nz}{\Delta Nmax} \right) \cdot \left( \frac{\alpha\,max - \alpha}{\alpha - \alpha 0} \right) \right]$$

dans laquelle :

- Nz est le facteur de charge ;
- $\Delta Nmax$ est la valeur de marge de manoeuvre maximale affichée ;
- $\alpha$ est l'angle d'incidence ;
- $\alpha max$ est l'angle d'incidence maximal ; et
- $\alpha 0$ est l'angle d'incidence de portance nulle.

En outre, deuxièmement, pour déterminer la marge de manoeuvre relative à la manoeuvre de piqué, ladite seconde marge correspond avantageusement à une marge de vitesse $\Delta V$.

De préférence, on calcule ladite marge de vitesse $\Delta V$, à partir de l'expression suivante :

$$\Delta V = 1 - \left[ \frac{Nz + Kp(Vmax - V) - Kd(dV/dt)}{\Delta Nmax} \right]$$

dans laquelle :

- Nz est le facteur de charge ;
- $\Delta Nmax$ est la valeur de marge de manoeuvre maximale affichée ;
- V est la vitesse de l'aéronef ;
- Vmax est la vitesse maximale de l'aéronef ;
- (dV/dt) est la dérivée par rapport au temps de la vitesse V ; et
- Kp et Kd sont des paramètres prédéterminés.

La présente invention concerne également un dispositif d'aide au pilotage d'un aéronef, qui est susceptible de mettre en oeuvre le procédé précité.

Selon l'invention, ledit dispositif du type comportant :

- des moyens de détermination pour déterminer un vecteur vitesse de l'aéronef ; et
- des moyens d'affichage pour présenter sur un écran de visualisation un premier signe caractéristique illustrant ledit vecteur vitesse de l'aéronef,

est remarquable en ce qu'il comporte, de plus, des moyens de détermination auxiliaires pour déterminer au moins une marge de manoeuvre longitudinale de l'aéronef, qui est exprimée en facteur de charge et qui est relative à l'une des deux manoeuvres de cabrage et de piqué de l'aéronef, et en ce que lesdits moyens d'affichage présentent de plus, sur ledit écran de visualisation, au moins un second signe caractéristique qui est associé audit premier signe caractéristique et qui illustre ladite marge de manoeuvre longitudinale.

De préférence, lesdits moyens de détermination auxiliaires comportent :

- des premiers moyens pour déterminer une marge de manoeuvre longitudinale qui est relative à une manoeuvre de cabrage de l'aéronef ; et
- des seconds moyens pour déterminer une marge de manoeuvre longitudinale qui est relative à une manoeuvre de piqué de l'aéronef.

La présente invention concerne en outre un aéronef, notamment un avion de transport, qui est équipé d'un dispositif d'aide au pilotage tel que celui précité.

Les figures du dessin annexé feront bien comprendre comment l'invention peut être réalisée. Sur ces figures, des références identiques désignent des éléments semblables.

La figure 1 est le schéma synoptique d'un dispositif d'aide au pilotage conforme à l'invention.

Les figures 2 et 3 montrent la présentation sur un écran de visualisation de signes caractéristiques qui illustrent des marges de manoeuvre longitudinales relatives, respectivement, à des manoeuvres de cabrage et de piqué.

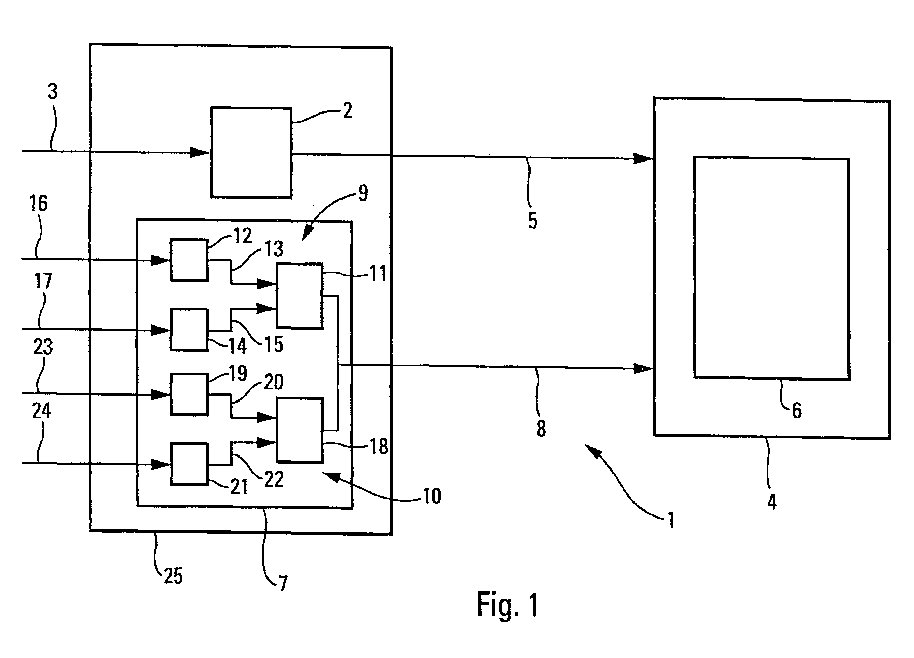

Le dispositif 1 conforme à l'invention et représenté schématiquement sur la figure 1 est embarqué sur un aéronef, par exemple un avion de transport, non représenté, et est destiné à aider un pilote dudit aéronef pour maîtriser le pilotage.

Ledit dispositif 1 comporte de façon connue :

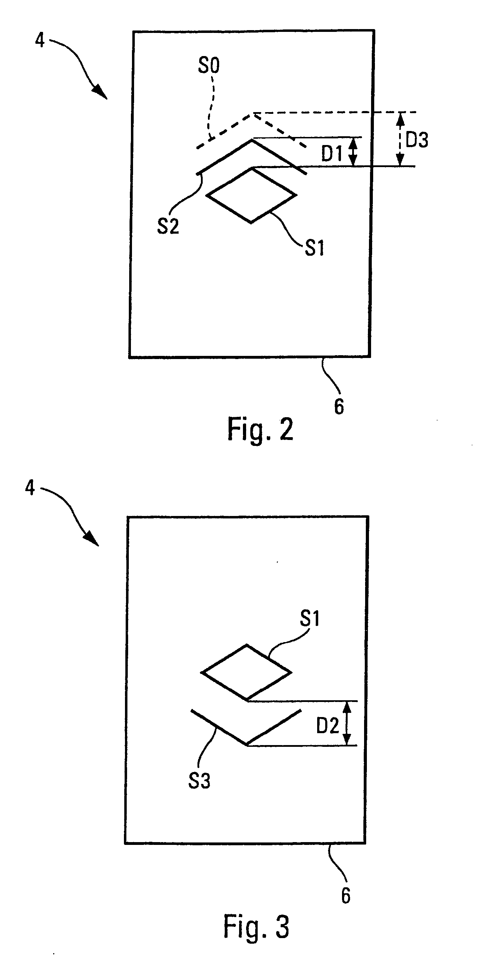

- des moyens 2, de type usuel, qui reçoivent des informations par une liaison 3 et qui déterminent de manière usuelle la valeur d'un vecteur vitesse de l'aéronef ; et
- des moyens d'affichage 4 qui sont reliés par une liaison 5 aux moyens 2 pour présenter, de façon usuelle, sur un écran de visualisation 6, un premier signe caractéristique S1 (représenté sur les figures 2 et 3) qui illustre ledit vecteur vitesse de l'aéronef.

Selon l'invention :

- ledit dispositif 1 comporte, de plus, des moyens auxiliaires 7 pour déterminer au moins une marge de manoeuvre longitudinale de l'aéronef, qui est exprimée en facteur de charge Nz et qui est relative à l'une des deux manoeuvres de cabrage et de piqué de l'aéronef. Dans le cadre de la présente invention, la marge de manoeuvre longitudinale peut être définie comme la différence entre une valeur limite admissible et la valeur actuelle d'une grandeur caractéristique du mouvement longitudinal de l'aéronef. Cette marge de manoeuvre longitudinale traduit donc le domaine de manoeuvre accessible au pilote pour respecter les limitations opérationnelles de l'aéronef. Dans un mode de réalisation préféré de l'invention, les moyens 2 et les moyens auxiliaires 7 sont regroupés en une seule et même unité centrale 25 ; et
- lesdits moyens d'affichage 4 présentent de plus, sur ledit écran de visualisation 6, au moins un second signe caractéristique S2, S3 (figures 2 et 3) qui est associé audit premier signe caractéristique S1 et qui illustre ladite marge de manoeuvre longitudinale.

La marge de manoeuvre longitudinale qui est, selon l'invention, exprimée en terme de facteur de charge Nz présente de nombreux avantages, et en particulier :

- une meilleure représentativité du comportement dynamique de l'aéronef ;
- une homogénéité avec certaines actions d'un pilote sur un organe de commande de l'aéronef ; et
- une simplification de l'affichage, car la marge de manoeuvre longitudinale est définie dans le plan de l'écran 6.

Selon l'invention, lesdits moyens auxiliaires 7 comportent :

- des premiers moyens 9 pour déterminer une marge de manoeuvre longitudinale qui est relative à une manoeuvre de cabrage de l'aéronef et qui est présentée par un second signe caractéristique S2 (figure 2) ; et
- des seconds moyens 10 pour déterminer une marge de manoeuvre longitudinale qui est relative à une manoeuvre de piqué de l'aéronef et qui est présentée par un second signe caractéristique S3 (figure 3).

Dans un mode de réalisation préféré montré sur les figures 2 et 3 :

- le premier signe caractéristique S1 illustrant le vecteur vitesse, est représenté sous forme de losange ; et
- le second signe caractéristique S2, S3 illustrant la marge de manoeuvre longitudinale, est représenté sous forme de chevron, qui est agencé au-dessus (cabrage) ou au-dessous (piqué) dudit premier signe caractéristique S1.

De plus, selon l'invention, chaque second signe caractéristique S2, S3 est présenté sur l'écran de visualisation 6 de telle manière que la distance D1, D2 entre ledit premier signe caractéristique S1 et ce second signe caractéristique S2, S3 soit proportionnelle à la marge de manoeuvre longitudinale correspondante, déterminée par les moyens auxiliaires 7.

Ainsi, selon l'invention :

- la distance D1 (figure 2) entre les signes S1 et S2 est proportionnelle à la marge de manoeuvre longitudinale relative à une manoeuvre de cabrage ; et
- la distance D2 (figure 3) entre les signes S1 et S3 est proportionnelle à la marge de manoeuvre longitudinale relative à une manoeuvre de piqué.

Par ailleurs, comme montré sur la figure 2, on présente sur l'écran de visualisation 6 le second signe caractéristique S2, uniquement si la marge de manoeuvre longitudinale est inférieure à une valeur $\Delta Nmax$ prédéterminée (illustrée par un chevron SO en traits interrompus), c'est-à-dire uniquement si la distance D1 est inférieure à une distance D3 prédéterminée.

Les moyens 9 pour déterminer la marge de manoeuvre longitudinale relative à une manoeuvre de cabrage comportent des moyens 11 pour déterminer, comme marge de manoeuvre longitudinale, la marge de manoeuvre la plus contraignante entre :

- une première marge de facteur de charge $\Delta Nzc$ déterminée par un moyen de calcul 12 et reçue par une liaison 13 ; et
- une seconde marge d'angle d'incidence $\Delta\alpha$ déterminée par un moyen de calcul 14 et reçue par une liaison 15.

Bien entendu, comme indiqué précédemment, selon l'invention ces marges $\Delta Nzc$ et $\Delta\alpha$ sont toutes deux exprimées en terme de facteur de charge Nz.

Les moyens 11 qui prennent en compte à chaque instant la marge la plus contraignante, choisissent donc la plus petite des deux marges.

De plus, comme indiqué précédemment, la marge disponible à la sortie desdits moyens 11 n'est affichée par les moyens 4, que si elle est inférieure à la valeur $\Delta Nmax$ (chevron S0). Cela permet de ne pas surcharger l'affichage lorsque ladite marge est suffisante pour pouvoir manoeuvrer l'aéronef sans risque de limitation liée au facteur de charge Nz ou à l'angle d'incidence $\alpha$.

La marge de facteur de charge $\Delta Nzc$ qui est calculée par le moyen de calcul 12, à partir d'informations reçues par une liaison 16, est égale à la différence entre le facteur de charge maximal autorisé Nzmax et le facteur de charge courant Nz. Afin d'être affichée correctement sur l'écran 6, cette différence est bien entendu mise à l'échelle.

De préférence, on utilise la formule suivante pour calculer la valeur affichée $\Delta Nzc$ :

$$\Delta Nzc = 1 - \left[\frac{Nzmax - Nz}{\Delta Nmax}\right] \quad \text{(pour } Nz < Nzmax\text{).}$$

Par convention, la valeur affichée $\Delta Nzc$ est égale à 0, lorsque la marge est égale à la valeur maximale affichée $\Delta Nmax$ (le signe caractéristique S2 représentant la marge est éloigné au maximum du vecteur vitesse S1 sur l'écran 6 et se trouve sur S3) et elle est égale à 1, lorsque ladite marge est nulle (le signe caractéristique S2 représentant la marge se trouve alors sur le vecteur vitesse S1 sur l'écran 6).

Quant à la marge d'angle d'incidence $\Delta\alpha$, qui est calculée par le moyen de calcul 14 à partir d'informations reçues par une liaison 17, elle est égale à la différence entre l'angle d'incidence maximum autorisé αmax et l'angle d'incidence courant α.

Comme cela a été indiqué précédemment, afin d'être affichée correctement sur l'écran 6, cette différence est d'abord convertie en facteur de charge Nz, puis mise à l'échelle.

En écrivant tout d'abord l'équation de sustentation de l'aéronef pour les angles d'incidence α et αmax, on obtient :

$$\begin{cases} Nz.M.g = 1/2.\rho.s.V^2.Cz\alpha.(\alpha - \alpha0) \\ Nz(\alpha max).M.g = 1/2.\rho.s.V^2.Cz\alpha.(\alpha max - \alpha0) \end{cases}$$

où :

- M est la masse de l'aéronef ;
- g est l'accélération de la pesanteur ;
- $\rho$ est la densité de l'air ;
- s est une surface de référence (voilure) ;
- V est la vitesse de l'aéronef par rapport à l'air ;
- $Cz\alpha$ est le gradient de portance ; et
- $\alpha0$ est l'incidence de portance nulle,

d'où l'on déduit :

$$Nz(\alpha max) = Nz \left( \frac{\alpha max - \alpha0}{\alpha - \alpha0} \right)$$

De façon similaire à ΔNzc, on définit Δα par l'équation suivante qui tient compte de sa mise à l'échelle

$$\Delta\alpha = 1 - \left( \frac{Nz(\alpha max) - Nz}{\Delta N max} \right) \quad \text{(pour } Nz < Nz(\alpha max))$$

en remplaçant Nz(αmax) par la valeur issue de l'équation précédente, on obtient :

$$\Delta\alpha = 1 - \left[ \left( \frac{Nz}{\Delta N max} \right) . \left( \frac{\alpha max - \alpha}{\alpha - \alpha0} \right) \right]$$

Comme précédemment pour ΔNzc, la valeur affichée Δα est égale à 0, lorsque la marge est égale à la valeur maximale ΔNmax (le signe caractéristique S2 représentant la marge est éloigné au maximum du vecteur vitesse S1 sur l'écran 6 et se trouve sur S3), et elle est égale à 1, lorsque ladite marge est nulle (le signe caractéristique S2 représentant la marge touche alors le vecteur vitesse S1 sur l'écran 6).

De façon préférée, mais non exclusive, la valeur de αmax [qui dépend notamment de la valeur du Mach et de la configuration de l'aéronef (position des volets, etc ...)] est issue d'un calculateur non représenté et embarqué à bord de l'aéronef, ce calculateur utilisant ou fournissant par ailleurs ladite valeur pour d'autres applications (lois de pilotage, commandes de vol, etc ...).

Dans un mode préféré de réalisation de l'invention concernant un avion de transport civil ou militaire, on prend une valeur ΔNmax égale à 0,5 g, la valeur Nzmax étant quant à elle sensiblement égale à 2,5 g ou 2 g en fonction de la configuration de l'aéronef.

Par ailleurs, les moyens 10 pour déterminer la marge de manoeuvre longitudinale relative à une manoeuvre de piqué, comportent des moyens 18 pour déterminer, comme marge de manoeuvre longitudinale, la marge de manoeuvre la plus contraignante entre :

- une première marge de facteur de charge ΔNzp déterminée par un moyen de calcul 19 et reçue par une liaison 20 ; et

- une seconde marge de vitesse ΔV déterminée par un moyen de calcul 21 et reçue par une liaison 22.

Bien entendu, comme indiqué précédemment, selon l'invention ces marges ΔNzp et ΔV sont toutes deux exprimées en terme de facteur de charge Nz.

Les moyens 18 qui prennent en compte à chaque instant la marge la plus contraignante, choisissent donc la plus petite des deux marges précédentes.

En outre, comme indiqué précédemment, la marge disponible à la sortie des moyens 18 n'est affichée par les moyens 4 que si elle est inférieure à la valeur ΔNmax. Cela permet de ne pas surcharger l'affichage lorsque ladite marge est suffisante pour pouvoir manoeuvrer l'aéronef sans risque de limitation.

La marge de facteur de charge ΔNzp (pour le piqué) qui est calculée par le moyen de calcul 19, à partir d'informations reçues par une liaison 23, est déterminée de façon similaire à la marge ΔNzc (pour le cabrage) précitée, en utilisant l'expression :

$$\Delta Nzp = 1 - \left( \frac{Nz - Nz\min}{\Delta N\max} \right) \quad (\text{pour } Nz\min < Nz) \, .$$

Par ailleurs, la marge de vitesse ΔV qui est calculée par le moyen de calcul 21, à partir d'informations reçues par une liaison 24, est égale à la différence entre la vitesse maximale autorisée Vmax et la vitesse courante V de l'aéronef. De la même façon que pour la marge d'incidence Δα, afin d'être affichée correctement sur l'écran 6, cette différence est d'abord convertie en facteur de charge Nz, puis mise à l'échelle. La conversion est obtenue en utilisant une équation qui calcule un facteur de charge minimum (que l'on peut noter NzminV afin de le distinguer de Nzmin), en fonction d'une part de l'écart entre la vitesse courante V et une vitesse à atteindre (Vcible) et, d'autre part, d'un terme anticipateur fonction de la dérivée de la vitesse. Cette équation est la suivante :

$$NzminV = Kp\,(V\text{-}Vcible) + Kd\,(dV/dt).$$

Dans le cas présent, la vitesse à atteindre (Vcible) peut être assimilée à Vmax et, par conséquent, l'équation permettant d'effectuer la conversion en terme de facteur de charge devient :

$$NzminV = - Kp\,(Vmax\text{-}V) + Kd\,(dV/dt).$$

De façon similaire à ΔNzp, on définit ΔV par l'équation suivante qui tient compte de sa mise à l'échelle :

$$\Delta V = 1 - \left( \frac{Nz - Nz\min V}{\Delta N\max} \right)$$

En intégrant dans cette équation la valeur de NzminV issue de l'équation précédente, on obtient la formule donnant la valeur ΔV :

$$\Delta V = 1 - \left[ \frac{Nz + Kp\,(V\max - V) - Kd\,(dV/dt)}{\Delta N\max} \right]$$

## Revendications

1. Procédé d'aide au pilotage d'un aéronef, selon lequel on présente sur un écran de visualisation (6) un premier signe caractéristique (S1) illustrant un vecteur vitesse de l'aéronef,
   **caractérisé en ce que**, de plus :

- on détermine au moins une marge de manoeuvre longitudinale de l'aéronef, qui est exprimée en facteur de charge et qui est relative à l'une des deux manoeuvres de cabrage et de piqué de l'aéronef ; et

- on présente, sur ledit écran de visualisation (6), au moins un second signe caractéristique (S2, S3) qui est associé audit premier signe caractéristique (S1) et qui illustre ladite marge de manoeuvre longitudinale.

2. Procédé selon la revendication 1,
   **caractérisé en ce que** l'on détermine deux marges de manoeuvre longitudinales qui sont relatives respectivement à la manoeuvre de cabrage et à la manoeuvre de piqué de l'aéronef et **en ce que** l'on présente deux seconds signes caractéristiques correspondants (S2, S3), sur l'écran de visualisation (6).

3. Procédé selon l'une des revendications 1 et 2,
   **caractérisé en ce que** l'on présente ledit second signe caractéristique (S2, S3) sur l'écran de visualisation (6) de sorte que la distance (D1, D2) entre lesdits premier et second signes caractéristiques est proportionnelle à ladite marge de manoeuvre longitudinale.

4. Procédé selon l'une quelconque des revendications précédentes,
   **caractérisé en ce que** l'on présente sur l'écran de visualisation (6) ledit second signe caractéristique (S2) uniquement si la marge de manoeuvre longitudinale est inférieure à une valeur prédéterminée (S0).

5. Procédé selon l'une quelconque des revendications précédentes,
   **caractérisé en ce que** l'on détermine comme marge de manoeuvre longitudinale, la marge de manoeuvre la plus contraignante entre une première marge de facteur de charge et une seconde marge.

6. Procédé selon la revendication 5,
   **caractérisé en ce que**, pour déterminer la marge de manoeuvre relative à la manoeuvre de cabrage, ladite seconde marge correspond à une marge d'angle d'incidence.

7. Procédé selon la revendication 6,
   **caractérisé en ce que** l'on calcule ladite marge d'angle d'incidence $\Delta\alpha$, à partir de l'expression suivante :

$$\Delta\alpha = 1 - \left[\left(\frac{Nz}{\Delta Nmax}\right) \cdot \left(\frac{\alpha\,max - \alpha}{\alpha - \alpha 0}\right)\right]$$

dans laquelle :

- Nz est le facteur de charge ;
- $\Delta Nmax$ est la valeur de marge de manoeuvre maximale affichée ;
- $\alpha$ est l'angle d'incidence ;
- $\alpha max$ est l'angle d'incidence maximal ; et
- $\alpha 0$ est l'angle d'incidence de portance nulle.

8. Procédé selon la revendication 5,
   **caractérisé en ce que**, pour déterminer la marge de manoeuvre relative à la manoeuvre de piqué, ladite seconde marge correspond à une marge de vitesse.

9. Procédé selon la revendication 8,
   **caractérisé en ce que** l'on calcule ladite marge de vitesse $\Delta V$, à partir de l'expression suivante :

$$\Delta V = 1 - \left[\frac{Nz + Kp\,(Vmax - V) - Kd\,(dV/dt)}{\Delta Nmax}\right]$$

dans laquelle :

- Nz est le facteur de charge ;
- ΔNmax est la valeur de marge de manoeuvre maximale affichée ;
- V est la vitesse de l'aéronef ;
- Vmax est la vitesse maximale de l'aéronef ;
- (dV/dt) est la dérivée par rapport au temps de la vitesse V ; et
- Kp et Kd sont des paramètres prédéterminés.

**10.** Dispositif d'aide au pilotage d'un aéronef, ledit dispositif (1) comportant :

- des moyens de détermination (2) pour déterminer un vecteur vitesse de l'aéronef ; et
- des moyens d'affichage (4) pour présenter sur un écran de visualisation (6) un premier signe caractéristique (S1) illustrant ledit vecteur vitesse de l'aéronef,

**caractérisé en ce qu'**il comporte, de plus, des moyens de détermination auxiliaires (7) pour déterminer au moins une marge de manoeuvre longitudinale de l'aéronef, qui est exprimée en facteur de charge et qui est relative à l'une des deux manoeuvres de cabrage et de piqué de l'aéronef, et **en ce que** lesdits moyens d'affichage (4) présentent de plus, sur ledit écran de visualisation (6), au moins un second signe caractéristique (S2, S3) qui est associé audit premier signe caractéristique (S1) et qui illustre ladite marge de manoeuvre longitudinale.

**11.** Dispositif selon la revendication 10,
**caractérisé en ce que** lesdits moyens de détermination auxiliaires (7) comportent :

- des premiers moyens (9) pour déterminer une marge de manoeuvre longitudinale qui est relative à une manoeuvre de cabrage de l'aéronef ; et
- des seconds moyens (10) pour déterminer une marge de manoeuvre longitudinale qui est relative à une manoeuvre de piqué de l'aéronef.

**12.** Aéronef,
**caractérisé en ce qu'**il comporte un dispositif (1) d'aide au pilotage, tel que celui spécifié sous l'une des revendications 10 et 11.

**Claims**

**1.** A process for aiding the piloting of an aircraft, according to which a first characteristic sign (S1) illustrating a speed vector of the aircraft is presented on a display screen (6),
**characterized in that**, moreover:

- at least one longitudinal margin of maneuver of the aircraft is determined, which is expressed as a load factor and which relates to one of the two maneuvers of pitch-up and of pitch-down of the aircraft; and
- at least one second characteristic sign (S2, S3) which is associated with said first characteristic sign (S1) and which illustrates said longitudinal margin of maneuver is presented on said display screen (6).

**2.** The process as claimed in claim 1,
**characterized in that** two longitudinal margins of maneuver are determined which relate respectively to the pitch-up maneuver and to the pitch-down maneuver of the aircraft and **in that** two second corresponding characteristic signs (S2, S3) are presented on the display screen (6).

**3.** The process as claimed in one of claims 1 and 2,
**characterized in that** said second characteristic sign (S2, S3) is presented on the display screen (6) in such a way that the distance (D1, D2) between said first and second characteristic signs is proportional to said longitudinal margin of maneuver.

**4.** The process as claimed in any one of the preceding claims,
**characterized in that** said second characteristic sign (S2) is presented on the display screen (6) only if the longitudinal margin of maneuver is less than a predetermined value (S0).

**5.** The process as claimed in any one of the preceding claims,

**characterized in that** the most constraining margin of maneuver between a first load factor margin and a second margin is determined as longitudinal margin of maneuver.

6. The process as claimed in claim 5,
   **characterized in that**, to determine the margin of maneuver relating to the pitch-up maneuver, said second margin corresponds to an angle of incidence margin.

7. The process as claimed in claim 6,
   **characterized in that** said angle of incidence margin $\Delta\alpha$ is calculated from the following expression:

$$\Delta\alpha = 1 - \left[ \left( \frac{Nz}{\Delta Nmax} \right) \cdot \left( \frac{\alpha\,max - \alpha}{\alpha - \alpha 0} \right) \right]$$

in which:

   - Nz is the load factor;
   - $\Delta Nmax$ is the maximum value of margin of maneuver depicted;
   - $\alpha$ is the angle of incidence;
   - $\alpha max$ is the maximum angle of incidence; and
   - $\alpha 0$ is the zero lift angle of incidence.

8. The process as claimed in claim 5,
   **characterized in that**, to determine the margin of maneuver relating to the pitch-down maneuver, said second margin corresponds to a speed margin.

9. The process as claimed in claim 8,
   **characterized in that** said speed margin $\Delta V$ is calculated from the following expression:

$$\Delta V = 1 - \left[ \frac{Nz + Kp(Vmax - V) - Kd(dV/dt)}{\Delta Nmax} \right]$$

in which:

   - Nz is the load factor;
   - $\Delta Nmax$ is the maximum value of margin of maneuver depicted;
   - V is the speed of the aircraft;
   - Vmax is the maximum speed of the aircraft;
   - (dV/dt) is the derivative with respect to time of the speed V; and
   - Kp and Kd are predetermined parameters.

10. A device for aiding the piloting of an aircraft, said device (1) comprising:

   - means of determination (2) for determining a speed vector of the aircraft; and
   - means of depiction (4) for presenting on a display screen (6) a first characteristic sign (S1) illustrating said speed vector of the aircraft,

   **characterized in that** it moreover comprises auxiliary means of determination (7) for determining at least one longitudinal margin of maneuver of the aircraft, which is expressed as a load factor and which relates to one of the two maneuvers of pitch-up and of pitch-down of the aircraft, and **in that** said means of depiction (4) moreover present, on said display screen (6), at least one second characteristic sign (S2, S3) which is associated with said first characteristic sign (S1) and which illustrates said longitudinal margin of maneuver.

**11.** The device as claimed in claim 10,
**characterized in that** said auxiliary means of determination (7) comprise:

- first means (9) for determining a longitudinal margin of maneuver which relates to a pitch-up maneuver of the aircraft; and
- second means (10) for determining a longitudinal margin of maneuver which relates to a pitch-down maneuver of the aircraft.

**12.** An aircraft,
**characterized in that** it comprises a device (1) for aiding piloting, such as that specified under one of claims 10 and 11.

**Patentansprüche**

**1.** Verfahren zur Steuerungshilfe eines Flugzeugs, bei dem auf einem Anzeigebildschirm (6) ein erstes Kennzeichen (S1), das einen Geschwindigkeitsvektor des Flugzeugs darstellt, gezeigt wird,
**dadurch gekennzeichnet, dass** weiterhin:

- mindestens ein Längsmanövrierfähigkeitsspielraum des Flugzeugs bestimmt wird, der als Lastvielfaches ausgedrückt wird und der sich entweder auf ein Steigmanöver oder auf ein Sinkmanöver des Flugzeugs bezieht und
- auf dem Anzeigebildschirm (6) mindestens ein zweites Kennzeichen (S2, S3) gezeigt wird, das dem ersten Kennzeichen (S1) zugeordnet ist und das den Längsmanövrierfähigkeitsspielraum darstellt.

**2.** Verfahren nach Anspruch 1,
**dadurch gekennzeichnet, dass** zwei Längsmanövrierfähigkeitsspielräume bestimmt werden, die sich auf das Steigmanover bzw. auf das Sinkmanöver des Flugzeugs beziehen und **dadurch**, dass zwei zweite entsprechende Kennzeichen (S2, S3) auf dem Anzeigebildschirm (6) gezeigt werden.

**3.** Verfahren nach Anspruch 1 oder 2,
**dadurch gekennzeichnet, dass** das zweite Kennzeichen (S2, S3) auf dem Anzeigebildschirm (6) so gezeigt wird, dass die Distanz (D1, D2) zwischen dem ersten und zweiten Kennzeichen zu dem Längsmanövrierfähigkeitsspielraum proportional ist.

**4.** Verfahren nach einem der vorhergehenden Ansprüche,
**dadurch gekennzeichnet, dass** das zweite Kennzeichen (S2) nur dann auf dem Anzeigebildschirm (6) gezeigt wird, wenn der Längsmanövrierfähigkeitsspielraum geringer als ein vorgegebener Wert (S0) ist.

**5.** Verfahren nach einem der vorhergehenden Ansprüche,
**dadurch gekennzeichnet, dass** als Längsmanövrierfähigkeitsspielraum der zwingendere zwischen einem ersten Spielraum des Lastvielfachen und einem zweiten Spielraum bestimmt wird.

**6.** Verfahren nach Anspruch 5,
**dadurch gekennzeichnet, dass** zum Bestimmen des auf das Steigmanöver bezogenen Manövrierfähigkeitsspielraums der zweite Spielraum einem Spielraum des Anstellwinkels entspricht.

**7.** Verfahren nach Anspruch 6.
**dadurch gekennzeichnet, dass** der Spielraum des Anstellwinkels $\Delta\alpha$ aus dem folgenden Ausdruck berechnet wird:

$$\Delta\alpha = 1 - \left[ \left( \frac{Nz}{\Delta Nmax} \right) \cdot \left( \frac{\alpha max - \alpha}{\alpha - \alpha 0} \right) \right]$$

in dem:

- Nz das Lastvielfache ist;
- $\Delta$Nmax der angezeigte Maximalwert des Manövrierfähigkeitsspielraums ist;
- $\alpha$ der Anstellwinkel ist;

- αmax der maximale Anstellwinkel ist und
- α0 der Anstellwinkel bei Nullauftrieb ist.

8. Verfahren nach Anspruch 5,
**dadurch gekennzeichnet, dass** zum Bestimmen des auf das Sinkmanöver bezogenen Manövrierfähigkeitsspielraums der zweite Spielraum einem Geschwindigkeitsspielraum entspricht.

9. Verfahren nach Anspruch 8,
**dadurch gekennzeichnet, dass** der Geschwindigkeitsspielraum $\Delta V$ aus dem folgenden Ausdruck berechnet wird:

$$\Delta V = 1 - \left[ \frac{Nz + Kp(V\,max - V) - Kd(dV/dt)}{\Delta Nmax} \right]$$

in dem:

- Nz das Lastvielfache ist;
- $\Delta Nmax$ der angezeigte Maximalwert des Manövrierfähigkeitsspielraums ist;
- V die Geschwindigkeit des Flugzeugs ist;
- Vmax die Maximalgeschwindigkeit des Flugzeugs ist;
- (dV/dt) die Ableitung nach der Zeit der Geschwindigkeit V ist und
- Kp und Kd vorgegebene Parameter sind.

10. Einrichtung zur Steuerungshilfe eines Flugzeugs, wobei die Einrichtung (1) umfasst:

- Bestimmungsmittel (2) zum Bestimmen eines Geschwindigkeitsvektors des Flugzeugs und
- Anzeigemittel (4), um ein erstes Kennzeichen (S1), das den Geschwindigkeitsvektor des Flugzeugs darstellt, auf einem Anzeigebildschirm (6) anzuzeigen,

**dadurch gekennzeichnet, dass** sie außerdem Hilfsbestimmungsmittel (7) zum Bestimmen mindestens eines Längsmanövrierfähigkeitsspielraums des Flugzeugs umfasst, der als Lastvielfaches ausgedrückt wird und der sich entweder auf ein Steigmanöver oder auf ein Sinkmanöver des Flugzeugs bezieht und **dadurch**, dass die Anzeigemittel (4) außerdem auf dem Anzeigebildschirm (6) mindestens ein zweites Kennzeichen (S2, S3) darstellen, das dem ersten Kennzeichen (S1) zugeordnet ist und das den Längsmanövrierfähigkeitsspielraum darstellt.

11. Einrichtung nach Anspruch 10,
**dadurch gekennzeichnet, dass** die Hilfsbestimmungsmittel (7) Folgendes umfassen:

- erste Mittel (9) zum Bestimmen eines Längsmanövrierfähigkeitsspielraums, der sich auf ein Steigmanöver des Flugzeugs bezieht und
- zweite Mittel (10) zum Bestimmen eines Längsmanövrierfähigkeitsspielraums, der sich auf ein Sinkmanöver des Flugzeugs bezieht.

12. Flugzeug,
**dadurch gekennzeichnet, dass** es eine Einrichtung (1) zur Steuerungshilfe, wie die unter einem der Ansprüche 10 und 11 spezifizierte, aufweist.

Fig. 1

EP 1 310 769 B1

4

S0

D3

D1

S2

S1

6

Fig. 2

4

S1

D2

S3

6

Fig. 3

**EP 1 310 769 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5808563 A